# EUROPEAN PATENT SPECIFICATION

(11) **EP 0 610 410 B1**
(45) Date of publication and mention of the grant of the patent: **16.06.1999**
(21) Application number: 92923703.0
(22) Date of filing: 30.10.1992
(51) Int. Cl.: A23C 3/02, A23C 3/037

(54) **A METHOD OF HEAT-TREATING LIQUID MILK PRODUCT**
VERFAHREN FÜR DIE WÄRMEBEHANDLUNG EINES FLÜSSIGEN MILCHPRODUKTES
PROCEDE DE TRAITEMENT THERMIQUE D'UN PRODUIT LAITIER LIQUIDE

(30) Priority: 31.10.1991 DK 180291
(43) Date of publication of application: 17.08.1994
(73) Proprietor: APV PASILAC A/S, 8100 Arhus C (DK)
(72) Inventor: PEDERSEN, Poul, Johannes, DK-7870 Roslev (DK); POULSEN, Ole, DK-7400 Herning (DK); KNARREBORG, Lisbeth, DK-7400 Herning (DK); KJARULFF, Gorm, Bro, DK-6920 Videbak (DK); CASTBERG, Helge, Bakketun, N-1410 Kolbotn (NO)
(74) Representative: Thierry-Carstensen, Ole Jean
(86) International application number: DK9200314
(87) International publication number: WO9308697

(56) References cited:
- EP-A- 0 166 127
- WO-A-87/05469
- DE-A- 1 498 435
- GB-A- 2 120 528
- US-A- 4 684 531

## Description

The present invention relates to a method of heat-treating liquid milk product, which after packing is distributed and stored at no higher than conventional cold chain temperatures, and whereby the content of psychrotrophic, aerobic spores in the product is reduced by the heated product being held at a sufficiently high holding temperature for a predetermined holding period.

### Background Art

Various methods of heat-treating unpasteurized milk are known. Generally speaking, an increased holding temperature of the milk causes an increased reduction of the bacterial content and accordingly, other things being equal, a longer keeping ability of the milk during succeeding storage. However, the increased holding temperature unfortunately results in an increased degree of chemical change and consequently in increased deterioration of the sensory properties of the heat-treated milk.

The chemical change causing a deterioration of the sensory properties, such as the development of a so-called "cooked" taste, is of an extent which inter alia is reflected in the extent of the denaturation of whey proteins, said denaturation more or less following parallelly to the development of the cooked taste. The whey protein denaturation can be easily demonstrated by chemical analysis.

When unpasteurized milk is low-pasteurized, the heated milk is held at a holding temperature of about 75°C for at least 15 sec. and the thus heat-treated milk possesses particularly good sensory properties. The extent of the whey protein denaturation by such a method is about 18 to 20%. No reduction occurs, however, of psychrotrophic, aerobic spores, with the result that usually the low-pasteurized milk has a keeping ability of only 2 to 3 days when stored at 10°C.

When unpasteurized milk is high-pasteurized, the milk is held at a holding temperature of about 85 to 90°C for about 15 sec. with the result that the heat-treated milk has sensory properties somewhat comparable with those of the low-pasteurized milk. Such a method involves a whey protein denaturation of about 30 to 35%. However, this increased holding temperature surprisingly often involves an increased conversion of psychrotrophic, aerobic spores into bacteria and increased growth of these bacteria, resulting in a shorter keeping ability, especially at a storing temperature of about 10°C. Therefore, a particularly reserved attitude applies to heat-treating unpasteurized milk at increased holding temperatures to product treated milk to be distributed and stored at only the conventional cold chain temperature.

As a consequence, the conventional alternative is to sterilize the unpasteurized milk, so that it can be distributed and stored at ambient temperatures or cold chain temperatures, indifferently. This sterilization is normally achieved by an ultra-high-temperature heat treatment, viz. UHT heat treatment. The definition of UHT treatment is according to IDF (International Dairy Federation) D-Document 191, 1989, a heat-treatment for killing all the micro-organisms capable of propagating in milk and milk products, and whereby the temperature is increased above 100°C so that an Fo value of at least 3 is obtained. This Fo value is obtained at 140°C for 2 to 3 sec., but in practice it is common to use a stronger heat-treatment of 143°C for 3 to 4 sec. in order reliably to ensure a satisfactory killing effect on the very heat-resistant thermophilic spores. The UHT-treated milk possesses a particularly long keeping ability of more than 4 weeks at a storing temperature of 10°C or more, provided that the packing is carried out under so-called aseptic conditions, viz. sterile conditions, which is the most expensive of the packing methods. The extent of whey protein denaturation by such a heat-treatment is, however, particularly high and at least 55 to 80%, and the heat-treated milk possesses considerably deteriorated sensory properties compared with low-pasteurized milk and particularly suffers from a dominating "cooked" taste.

The article "Direct Sterilization of Heat-Sensitive Fluids by a Free-Falling-Film Sterilizer" by John E. Nahra and Dennis C. Westhoff in "Food Technology", September 1980, stated that sterile milk was becoming quite popular in Europe, through not requiring refrigeration and through allowing for a longer shelf life than pasteurized milk. The article added that the product was generally sterilized by means of ultra-high-temperature (UHT) processing methods and was aseptically packaged in sterile containers.

The article mentioned that a study funded by the United States Department of Energy at the University of Maryland had concluded in 1979 that the introduction of sterile milk in the United States was feasible and that conversion from pasteurized to unrefrigerated sterile milk could save approximately 185 million barrels of oil and nearly $7 billion dollars by the year 2000; nevertheless, sterile milk had not been commercially introduced in the United States at that time for a number of reasons, one of which was the acceptability of the flavour--conventional UHT methods resulted in some degree of heat damage to the product, resulting in off- or cooked flavour.

The article explained that sterilization of heat-sensitive fluids such as milk was best accomplished by UHT processing because this type of processing made the best use of a basic biochemical principle--that bactericidal effect increases at a greater rate than chemical change as temperatures are increased. This was illustrated graphically in Figure 1 of the article, although a Table (reproduced below) of the article illustrated the same principle in a more concrete fashion, showing the time/temperature parameters at which the relative chemical reaction remains constant while the microbial kill increases dramatically; for example, the bactericidal effect on milk processed at 137.8°C (280°F) for about 0.8 sec. is 15,625 times as great as that on milk processed at 77.8°C (172°F) for 50 sec., although the relative chemical change is the same.

**Table**

| RELATIVE MICROBIAL KILL *at time/temperature conditions at which relative chemical reaction remains constant* | | | | |
|---|---|---|---|---|
| Process temperature | | Average holding time (sec) | Relative chemical reaction | Relative microbial kill |
| (°F) | (°C) | | | |
| 172 | 78 | 50 | Cₒ | Fₒ |
| 190 | 88 | 25 | Cₒ | 5Fₒ |
| 226 | 108 | 6.25 | Cₒ | 125Fₒ |
| 280 | 138 | 0.78 | Cₒ | 15,625Fₒ |
| 298 | 148 | 0.39 | Cₒ | 78,125Fₒ |

The article stated that a new direct method for sterilizing milk and other heat-sensitive fluids had been developed to overcome the problems inherent in conventional UHT methods. In this direct method, the liquid product was heated to ultra-high temperatures as it fell freely in thin films or sheets in a pressurized steam atmosphere, without contacting any surface during the heating process; research indicated that the milk sterilized by that method had properties significantly different from the conventional UHT milk widely available in Europe, was indistinguishable from fresh pasteurized milk, and retained its flavour quality during extended unrefrigerated storage.

The article described the direct method of sterilization and discussed the results of research studies on sterility and acceptability of the sterilized milk.

According to the article, product temperature could be raised to UHT levels in the approximately 0.33 sec. that it took for the product to fall through the vessel. Table 2 of the article set out results of incubation testing of sterilized milk, in which processing temperatures of 148.9°C, 143.3°C, 137.8°C, 132.2°C, 126.7°C and 121.1°C had been employed with a holding time which had been fixed and calculated to be 1.79 sec. The Table demonstrated that the milk was biologically stable (i.e. sterile) once so processed at temperatures of 132.2°C and above. A similar result was obtained from incubation testing of larger volumes of sterilized milk.

US-A-4,161,909 and AU-B-610,233 disclose UHT-treatment systems in which direct heating by steam infusion is used, the unsterilized milk being sprayed into a steam atmosphere.

GB-A-1,187,766 discloses an UHT-treatment in which milk, for example homogenized, pasteurized cows' milk, is sterilized by being heat-treated at at least 150°C for a fraction of one second, preferably between 180°C and 220°C for between 0.4 and 0.1 sec. For example, the heating of a column of milk by microwave radiation during the passage of the milk through a ceramic wave guide to 193°C and holding at this temperature for 0.15 sec. is disclosed as being sufficient to sterilize the milk without inducing any noticeable flavour, colour or texture changes. However, in practice, at such high temperature the control of the holding time period at such low value is highly critical and any slight failure to maintain the necessary low value leads almost immediately either to failure to sterilize if the time period is too short or very poor sensory properties if the time period is excessive.

NO-B-143,416 discloses a sterilization method for milk or similar protein-containing liquid foods, especially those with a high micro-organism content, in such a manner as to avoid the product acquiring a "cooked" taste.

The product is pre-heated, for example in a plate heatexchanger, to between 70°C end 90°C, preferably 85°C, to kill the pathogenic micro-organisms and also to cause the bacterial spores to absorb moisture, and then centrifuged in a second treatment step at for example 55°C for 10 to 20 sec. so that the majority of the present spares and other micro-organisms are separated out. In a third treatment step, the product is held at a temperature of 35°C to 40°C for 10 to 20 min. to cause the spores to germinate and thus make them easier to kill, and finally heated, for example by steam injection, for a short time to a temperature of about 110°C to 140°C, preferably 130°C, for 1 to 3 sec., in order to render inactive the remaining micro-organisms. This method is time-consuming and complicated and thus impractically expensive, especially for unpasteurized milk with a relatively low micro-organism content.

US-A-4,684,531 discloses as its own prior art that food products in powder or concentrate form are reconstituted with water and then subjected to a preserving treatment (sterilisation; pasteurisation, holding-hot, etc.) and then the reconstituted food product, for example fruit juice or milk, is packaged under sterile conditions. The processes used consisted of preliminary reconstitution of the food product, followed by heat treatment for sterilisation or pasteurisation, one form of the heat treatment being indirectly through walls and another form being directly by injecting high-temperature steam or by causing the product to fall as droplets into high-temperature steam.

US-A-4684531 discloses as its own invention the idea of employing at least part of the reconstituting water to perform the sterilising or pasteurising heat treatment.

In one embodiment, superheated water is injected under a pressure of the order of about 18.10⁵Pa at a flow rate of 400 litres per hour, to obtain a temperature of the order of 135°C for in situ treatment of the liquid food product, the pressure prevailing in a tubular mixing chamber of the apparatus being of the order of about 5.10⁵Pa.

The intimate mixing is performed in a fraction of a second, for example 1/4 second, and sterilizing heat treatment, for example in the case of milk, is complete after a period of the order of 2 to 5 seconds. In another embodiment, in which a non-sterile product is produced, the superheated water is injected at a temperature of the order of 100°C, so that the temperature of the liquid treated actually becomes less than 100°C, whereby in this case a pasteurising treatment is carried out on the product.

It is well known that the conversion of milk into powder or concentrate form seriously changes its sensory properties.

### Description of the Invention

The present invention is directed towards significantly increasing the keeping ability of liquid milk product which is to be distributed and stored in a non-sterilized form at only temperatures no higher than conventional cold chain temperatures, without seriously changing the sensory properties, in particular the taste, of the product, in comparison with those of low-pasteurized milk product. A particularly pressing demand exists for such a product.

According to the present invention, there is provided a method comprising heat-treating non-sterile milk product, whereby the content of psychrotrophic, aerobic spores in the product is reduced by the heated product being held at a sufficiently high holding temperature for a predetermined holding period, but the product remains non-sterile, packing the heat-treated, non-sterile product, and distributing and storing the packed, non-sterile product at no higher than conventional cold chain temperatures, characterized in that said heat-treating is by direct heating of the non-sterile product and by then holding the heated, non-sterile product at a holding temperature in the range of 130°C to 145°C for a holding period of no more than 1 sec.

The resulting heat-treated product surprisingly possesses a novel combination of good sensory properties and longer keeping ability. The good sensory properties are due to a negligible degree of chemical change for the heat-treatment temperature of 130°C to 145°C, and the sensory properties can compete with the properties obtained by low-pasteurization of liquid milk product.

We have found that the present invention results in an extent of whey protein denaturation of between about 30 and 40% and a keeping ability of about two weeks at 10°C with so-called pure filling during packing. The direct heating may in a particularly advantageous manner be carried out by way of a steam infusion method, where the product is injected into a steam atmosphere and held at a temperature of between 133°C and 145°C for less than 1 sec., particularly more than 0.25 sec., especially between 0.5 and 1 sec. In the light of the use of temperatures between 133°C and 145°C, accuracy of the holding time is not highly critical, especially if holding times between 0.5 and 1 sec. are employed. The heated product may be held at a holding temperature of 135°C to 143°C.

The liquid milk product may be unpasteurized milk or cream, low-pasteurized milk or cream, or unpasteurized or low-pasteurized, fat-reduced milk.

### Best Mode for Carrying Out the Invention

An example of the present invention will now be described.

Unpasteurized fresh milk is subjected to a heat-treatment, after which the milk is packed in cartons and then distributed and stored in a cold chain at temperatures preferably below 6°C, but with temperature fluctuations up to 10°C being liable to occur. The heat-treatment comprises direct heating by a so-called steam infusion method where the milk is injected into a steam atmosphere. An apparatus for subjecting the milk to such heat-treatment is for instance described in AU-B-610,233. The condensed steam and the milk is quickly removed from this apparatus by means of vacuum by said steam and milk flowing into a vacuum chamber, in which the water deriving from the condensed steam is removed. The pressure drop of the condensed steam causes an instantaneous drop in temperature. The total holding period at the holding temperature is less than 1 sec. The holding temperature is in the range 133°C to 145°C, preferably 135°C to 143°C. We have found that a reduction of at least 10⁶ times is obtainable in the content of psychrotrophic, aerobic spores in the milk with the effect that the desired longer keeping ability of the milk is obtained during the succeeding storage and distribution.

In order to compare the extent of whey protein denaturation (and of free sulphydryl groups consequently formed) and keeping ability during the succeeding storage at about 10°C, test were carried out with various heat treatment methods using unpasteurized fresh milk from the same batch. The tests and their results are shown in Table 1.

**Table 1**

| Holding temperature | Holding period | Whey denaturation | Free sulphydryl Groups (micromols/kg) | Keeping ability at 10°C (pure filling) | "Cooked" Flavour (Points out of 10 by Test Panel) |
|---|---|---|---|---|---|
| 75°C | 15 sec. | 0-18% | - | 2-3 days | 1.75 |
| 127°C | 2 sec. | 46% | 43 | 1.5-2 weeks | 5.25 |
| 143°C | 2-3 sec. | 55-57% | 52 | 4 weeks | 5.5 |
| 135-143°C | 0.8 sec. | 28-41% | 24-31 | 1.5-2 weeks | 2.25 |

For comparison purposes, data have been included in the Table for a sterilized milk having a long keeping ability and produced in the same apparatus by a so-called UHT direct heating method.

As appears clearly from the Table, the whey protein denaturation by the new method is between about 30% and 40%, i.e. similar to the values obtained with high-pasteurization and further the heat-treated milk has maintained particularly good sensory properties as well as keeping ability as long as 1.5 to 2 weeks.

It should furthermore be noted that as far as the keeping ability depends highly on the type of filling i.e. packing of the product. The following filling methods are known:
conventional filling: Affected by the surrounding air.
Pure filling: Protected by air filters and sterilization of the carton.
Aseptic filling: completely sterile filling.

The following keeping abilities were obtained with a milk produced by the present method.

**Table 2**

| Filling method | Storing temperature | Storing period |
|---|---|---|
| Conventional filling | 10°C | up to 1.5 week |
| Pure filling | 10°C | 1.5 to 2 weeks |
| Ultrapure filling | 10°C | 2 to 3 weeks |
| Aseptic filling | 10°C | 3 to 5 weeks |

It should be noted that many modifications can be carried out without thereby deviating from the scope of the invention. For example a steam injection method, in which the steam is injected into the flow of milk, may instead be used.

## Claims

1. A method comprising heat-treating non-sterile milk product, whereby the content of psychrotrophic, aerobic spores in the product is reduced by the heated product being held at a sufficiently high holding temperature for a predetermined holding period, but the product remains non-sterile, packing the heat-treated, non-sterile product, and distributing and storing the packed, non-sterile product at no higher than conventional cold chain temperatures, characterized in that said heat-treating is by direct heating of the non-sterile product and by then holding the heated, non-sterile product at a holding temperature in the range of 130°C to 145°C for a holding period of no more than 1 sec.

2. A method as claimed in claim 1, characterized in that the holding temperature and period are in the range of 133°C to 145°C for less than 1 sec.

3. A method as claimed in claim 1 or 2, characterized in that the direct heating is carried out by contacting the product with steam.

4. A method according to claim 3, characterized in that the direct heating is by a steam infusion method, where the product is injected into a steam atmosphere.

5. A method as claimed in any preceding claim, characterized in that the holding of the heated product is at a holding temperature of 135°C to 143°C.

6. A method as claimed in any preceding claim, characterized in that the holding of the product at the holding temperature is for a holding period of more than 0.25 sec.

7. A method as claimed in claim 6, characterized in that the holding of the product at the holding temperature is for a holding period of 0.5 to 0.9 sec.

8. A method as claimed in any preceding claim, characterized in that whey protein denaturation of between about 30% and about 40% occurs.

9. A method as claimed in any preceding claim, characterized in that the content of psychrotrophic, aerobic spores is reduced as aforesaid at least 10⁶ times.

10. A method as claimed in any preceding claim, characterized in that the product is selected from the group consisting of unpasteurized milk and cream, low-pasteurized milk and cream and unpasteurized and low-pasteurized, fat-reduced milk.

11. A method according to claim 10, characterized in that the product is unpasteurized milk.

12. A method according to any preceding claim, wherein said packing is under lower than aseptic filling conditions.

13. A method according to claim 12, wherein the packing is under pure filling conditions.

## Patentansprüche

1. Verfahren, das das Wärmebehandeln von nicht-sterilen Milchprodukten, wodurch der Gehalt an psychrotropen, aeroben Sporen in dem Produkt vermindert wird, indem das erhitzte Produkt bei einer ausreichend hohen Halte-Temperatur für eine vorbestimmte Halte-Periode gehalten wird, wobei das Produkt jedoch nicht-steril bleibt, das Verpacken des wärmebehandelten, nicht-sterilen Produktes und das Verteilen sowie Lagern des verpackten, nicht-sterilen Produktes bei Temperaturen umfaßt, die nicht höher als herkömmliche Kühlketten-Temperaturen sind, dadurch gekennzeichnet, daß das wärmebehandeln durch direktes Erwärmen des nicht-sterilen Produktes und anschließendes Halten des erwärmten, nichtsterilen Produktes bei einer Halte-Temperatur im Bereich von 130°C bis 145°C für eine Halte-Periode von nicht mehr als einer Sekunde erfolgt.

2. Verfahren nach Anspruch 1, dadurch gekennzeichnet, daß die Halte-Temperatur und -Periode im Bereich von 133°C bis 145°C für weniger als eine Sekunde liegen.

3. Verfahren nach Anspruch 1 oder 2, dadurch gekennzeichnet, daß das direkte Erwärmen durchgeführt wird, indem das Produkt mit Dampf in Kontakt gebracht wird.

4. Verfahren nach Anspruch 3, dadurch gekennzeichnet, daß das direkte Erwärmen durch ein Dampfinjektionsverfahren durchgeführt wird, bei dem das Produkt in eine Dampfatmosphäre eingespritzt wird.

5. Verfahren nach einem der vorhergehenden Ansprüche, dadurch gekennzeichnet, daß das Kalten des erwärmten Produktes bei einer Halte-Temperatur von 135°C bis 143°C erfolgt.

6. Verfahren nach einem der vorhergehenden Ansprüche, dadurch gekennzeichnet, daß das Halten des Produktes bei der Halte-Temperatur für eine Halte-Periode von länger als 0,25 Sekunden erfolgt.

7. Verfahren nach Anspruch 6, dadurch gekennzeichnet, daß das Halten des Produktes bei der Halte-Temperatur für eine Halte-Periode von 0,5 bis 0,9 Sekunden erfolgt.

8. Verfahren nach einem der vorhergehenden Ansprüche, dadurch gekennzeichnet, daß Molkenprotein-Denaturation zwischen etwa 30% und etwa 40% stattfindet.

9. Verfahren nach einem der vorhergehenden Ansprüche, dadurch gekennzeichnet, daß der Gehalt an psychrotropen, aeroben Sporen um zumindest das 10⁶-fache vermindert wird.

10. Verfahren nach einem der vorhergehenden Ansprüche, dadurch gekennzeichnet, daß das Produkt ausgewählt ist aus der Gruppe, die nicht-pasteurisierte Milch und Sahne, geringpasteurisierte Milch und Sahne sowie nicht-pasteurisierte und gering-pasteurisierte fettreduzierte Milch umfaßt.

11. Verfahren nach Anspruch 10, dadurch gekennzeichnet, daß das Produkt nicht-pasteurisierte Milch ist.

12. Verfahren nach einem der vorhergehenden Ansprüche, bei dem das Verpacken unter Abfüllbedingungen erfolgt, die unterhalb von aseptischen Abfüllbedingungen liegen.

13. Verfahren nach Anspruch 12, bei dem das Verpacken unter reinen Abfüllbedingungen erfolgt.

## Revendications

1. Procédé comprenant le traitement thermique d'un produit laitier non stérile où la teneur en spores aérobies psychrotrophes dans le produit est réduite par le fait que le produit chauffé est maintenu à une température de maintien suffisamment élevée pendant une durée de maintien prédéterminée, mais le produit reste non stérile, le conditionnement du produit non stérile traité thermiquement et la distribution et le stockage du produit non stérile conditionné à des températures de chaîne de réfrigération pas supérieures aux températures conventionnelles, caractérisé en ce que ledit traitement thermique est réalisé par chauffage direct du produit non stérile puis maintien du produit non stérile chauffé à une température de maintien dans le domaine de 130°C à 145°C pendant une durée de maintien d'au plus 1 s.

2. Procédé selon la revendication 1, caractérisé en ce que la température et la durée de maintien sont dans le domaine de 133°C à 145°C pendant moins de 1 s.

3. Procédé selon la revendication 1 ou 2, caractérisé en ce que le chauffage direct est réalisé par mise en contact du produit avec de la vapeur.

4. Procédé selon la revendication 3, caractérisé en ce que le chauffage direct est réalisé par un procédé d'infusion dans la vapeur où le produit est injecté dans une atmosphère de vapeur.

5. Procédé selon l'une quelconque des revendications précédentes, caractérisé en ce que le maintien du produit chauffé est réalisé à une température de maintien de 135°C à 143°C.

6. Procédé selon l'une quelconque des revendications précédentes, caractérisé en ce que le maintien du produit à la température de maintien est réalisé pendant une durée de maintien supérieure à 0,25 s.

7. Procédé selon la revendication 6, caractérisé en ce que le maintien du produit à la température de maintien est réalisé pendant une durée de maintien de 0,5 à 0,9 s.

8. Procédé selon l'une quelconque des revendications précédentes, caractérisé en ce qu'il se produit une dénaturation des protéines du petit lait d'environ 30 % à environ 40 %.

9. Procédé selon l'une quelconque des revendications précédentes, caractérisé en ce que la teneur en spores aérobies psychrotrophes est réduite comme indiqué précédemment d'au moins 10⁶ fois.

10. Procédé selon l'une quelconque des revendications précédentes, caractérisé en ce que le produit est choisi dans le groupe consistant en le lait et la crème non pasteurisés, le lait et la crème faiblement pasteurisés et le lait à teneur en matières grasses réduite non pasteurisé et faiblement pasteurisé.

11. Procédé selon la revendication 10, caractérisé en ce que le produit est du lait non pasteurisé.

12. Procédé selon l'une quelconque des revendications précédentes, dans lequel ledit conditionnement est réalisé dans des conditions de remplissage moins strictes que le remplissage aseptique.

13. Procédé selon la revendication 12, dans lequel le conditionnement est réalisé dans des conditions de remplissage pur.
